# EUROPÄISCHE PATENTSCHRIFT

(11) **EP 1 749 564 B1**
(45) Veröffentlichungstag und Bekanntmachung des Hinweises auf die Patenterteilung: **29.12.2010**
(21) Anmeldenummer: 06115581.8
(22) Anmeldetag: 16.06.2006
(51) Int. Cl.: B01F 3/08, B01F 3/04, B01F 5/04, B01F 5/06, B01J 19/00

(54) **Stabilisator zum Vermischen oder Stabilisieren eines Gemisches mittels eines hydrodynamischen Kavitationsfeldes**
Stabilizer for mixing or stabilizing a mixture in a hydrodynamic cavitation field
Stabilisateur pour mélanger ou bien stabiliser un mélange dans un champ de cavitation hydrodynamique

(30) Priorität: 05.08.2005 DE 102005037026
(43) Veröffentlichungstag der Anmeldung: 07.02.2007
(73) Patentinhaber: Cavitator Systems GmbH, 84036 Kumhausen (Landshut) (DE)
(72) Erfinder: Huymann, Elmar, 6020, Innsbruck (AT)
(74) Vertreter: Strych, Werner Maximilian Josef

(56) Entgegenhaltungen:
- EP-A- 1 780 176
- EP-B1- 1 280 598
- WO-A-2006/027002
- WO-A-2007/020296
- DE-A1- 10 310 442

## Beschreibung

### I. Anwendungsgebiet

Die Erfindung betrifft einen hydrodynamischen Stabilisator.

### II. Technischer Hintergrund

Bekanntermaßen wird mit derartigen Stabilisatoren eine Suspension oder Emulsion mit geringem Aufwand und ohne mechanisch angetriebene Teile hergestellt, indem in der dahinströmenden Flüssigkeit zunächst dampfgefüllte Gasblasen erzeugt werden, die anschließend implosionsartig wieder zusammenbrechen.

Wenn dieses Zusammenbrechen einer großen Anzahl von Blasen, der so genannten Kavitationsblasen, in der Nähe der Grenzfläche zwischen zwei Phasenbereichen, also etwa großen Öltröpfchen in Wasser, geschieht, wird dadurch die zweite Komponente, in diesem Fall die Öltröpfchen, in kleinere Einheiten zerrissen und dadurch eine sehr feine Vermischung der beiden Komponenten und damit eine sehr stabile Suspension oder Emulsion erzeugt.

Die Erzeugung der Kavitationsblasen geschieht in einer strömenden Flüssigkeit durch einen Abfall des statischen Druckes unter den Dampfdruck der Flüssigkeit, wodurch sich dampfgefüllte Gasblasen bilden, z. B. aufgrund einer Stromeinengung.

Wenn anschließend der statische Druck durch eine Aufweitung des Strömungsquerschnitts wieder zunimmt und der statische Druck wieder den Dampfdruck übersteigt, brechen die Gasblasen zusammen.

Der statische Druck wird bei Wasser null oder negativ, wenn die Strömungsgeschwindigkeit einen bestimmten, von Umgebungsbedingungen abhängigen Wert, z. B. an den Abrisskanten etwa 14 m/sec., überschreitet.

Die Einengung und anschließende Aufweitung des Strömungsquerschnitts kann erreicht werden, indem in einer Durchflusskammer ein Hinderniskörper angeordnet wird, wobei der verbleibende Spalt z. B. zwischen Hinderniskörper und umgebendem Gehäuse der Durchflusskammer die Engstelle bildet.

Durch mehrfache Anordnung solcher Hinderniskörper hintereinander, aus Platzgründen vorzugsweise in Form von quer zur Strömungsrichtung stehenden Scheiben, wird der Kavitationseffekt vervielfacht, besonders indem in Strömungsrichtung die Ringspaltfläche von einer Scheibe zur nächsten jeweils abnimmt.

Zusätzlich entstehen dabei zu dem ersten, sich im Ringspaltbereich ausbildenden, Kavitationsfeld ergänzende Kavitationsfelder in den durchströmbaren Hohlräumen zwischen den Hinderniskörpern, und durch die räumliche Überlagerung der einzelnen Kavitationsfelder entsteht ein so genanntes Super-Kavitationsfeld, was eine Vervielfachung der Kavitationswirkung jedes einzelnen Kavitationsfeldes bewirkt.

Dabei ist es bisher bekannt, die Verkleinerung der Ringspaltfläche in Durchströmungsrichtung zu bewirken durch
- in Strömungsrichtung größer werdende, in der Gesamtheit einen Kegelstumpf bildende, Abfolge von Scheiben als Hinderniskörper in einem umgebenden zylindrischen Gehäuse als Durchflusskammer, z. B. gemäß DE 44 33 744 oder
- in einem ebenfalls konischen Gehäuse als Durchflusskammer, jedoch mit geringerer Konizität als die Konizität des durch die Hindernisse gebildeten Kegels bzw. Kegelstumpfes, so dass dennoch eine Verringerung der Ringspaltfläche in Durchströmungsrichtung vorliegt, z. B. gemäß EP 1 280 598, B1, wodurch ein so genanntes hydrodynamisches Super-Kavitationsfeld erzeugt wird.

Ergänzend wird noch auf die WO 2006/027002 A1 (Stand der Technik nach Art. 54 (3) EPÜ) verwiesen.

### III. Darstellung der Erfindung

### a) Technische Aufgabe

Es ist daher die Aufgabe gemäß der Erfindung, einen Stabilisator für eine bereits bestehende Mischung zu schaffen, der besonders einfach und kostengünstig aufgebaut ist.

### b) Lösung der Aufgabe

Diese Aufgabe wird durch Anspruch 1 gelöst. Vorteilhafte Ausführungsformen ergeben sich aus den Unteransprüchen.

Durch die Ausbildung des ersten Hinderniskörpers als Prallplatte, also mit einer der Strömungsrichtung der ersten Komponente ein möglichst starkes Hindernis bietenden, Prallfläche, die eben oder sogar gegen die anströmende erste Komponente konkav ausgebildet ist, kann - was nicht Gegenstand der vorliegenden Erfindung ist - durch diesen ersten Hinderniskörper hindurch im Gegenstrom die zweite Komponente zugeführt werden, so dass die beiden Komponenten im Bereich an oder unmittelbar vor der Prallfläche allein schon durch den Aufprall der ersten Komponente auf die Prallplatte stark vermischen.

Anstelle des Herstellens eines Gemisches kann ein bereits bestehendes Gemisch mit einer analogen Vorrichtung zum Zwecke des Stabilisierens bearbeitet werden, indem dann anstelle der ersten Komponente das zu stabilisierende Gemisch zugeführt wird, und keine weitere Komponente darüber hinaus zugeführt wird, somit auch keine Eingangsöffnung für die zweite Komponente sowie eine hierfür zuführende Rohrleitung benötigt wird.

Der Aufprall und das Vermischen ist deswegen besonders stark mischend, weil über den ersten Hinderniskörper hinaus, der Strömungsrichtung entgegen ragend, keine Halterung der Strömung entgegensteht, denn dieser erste wie auch die folgenden Hinderniskörper können an einer insbesondere in Form einer zentralen Achse ausgebildeten Halterung, die sich von der Gegenrichtung, also entgegen der Strömungsrichtung, annähert, im Zentrum der Durchflusskammer gehalten werden.

Indem in Strömungsrichtung nach der Eingangsöffnung zunächst eine Querschnittsverengung und anschließend eine Querschnittsaufweitung, beide vorzugsweise jeweils konusförmig, gegeben ist, wird durch die Querschnittsaufweitung ein Unterdruck in der Durchflusskammer vor der Prallplatte erzeugt, der die zugeführte zweite Komponente in die Durchflusskammer hineinsaugt und zusätzlich die Durchmischung verbessert.

Die Wirkung der Querschnittsaufweitung und der Verwirbelung ist umso besser, wenn zwischen der Querschnittsaufweitung und der Prallplatte eine Strecke mit etwa konstantem Querschnitt des Gehäuses liegt, um auf dieser Strecke die Druckverhältnisse über den Querschnitt stabilisieren zu lassen.

Das Gemisch wird über eine Ausgangsöffnung abgeführt, die vorzugsweise radial, insbesondere in Form eines radialen Ringspaltes, aus dem Gehäuse herausfließt.

Die Effizienz der Vorrichtung, die in der Regel in eine bestehende Rohrleitung eingesetzt wird, lässt sich steigern, indem - beispielsweise in Abhängigkeit der Fließgeschwindigkeit im zuführenden Rohr, der Viskosität der einzelnen Komponenten und deren Mischbarkeit - die Hinderniskörper axial verstellt werden, und zwar in ihrem Abstand zueinander und/oder gruppenweise oder gar insgesamt relativ zum umgebenden Gehäuse, wodurch bei einem kegelförmigen Gehäuse auch das Absolutmaß der Ringspaltflächen verändert wird.

Weiterhin ist es vorteilhaft, wenn die Hinderniskörper zum einen plattenförmig sind, um die Herstellung zu vereinfachen und zu verbilligen, und insbesondere so dünn ausgebildet sind, dass sie an ihren freien Kanten in Strömungsrichtung schwingen können, was das Erzeugen und Abreißen von Dampfblasen erleichtert.

Ebenso wird diese Entwicklung erleichtert durch eine möglichst scharfkantige Ausbildung der Abrisskanten der Hinderniskörper, also z. B. der Platten.

Der Durchflussspalt zwischen Hinderniskörpern und Gehäuse kann bei z. B. runden Hinderniskörpern, also Scheiben, der radiale Spalt zwischen der freien außen umlaufenden Kante der Scheiben und dem umgebenden Gehäuse sein.

Es sind jedoch auch andere Ausbildungen möglich, bei denen beispielsweise die plattenförmigen Hinderniskörper an ihrem radial äußersten Punkt durchaus das Gehäuse erreichen und dort mit diesem verbunden sind, aber beispielsweise nicht über den gesamten Umfang, sondern nur segmentweise, und in den Segmenten dazwischen radial verlaufende Schlitze oder Spalte vorhanden sind, die in axialer Richtung zueinander von einem Hinderniskörper zum nächsten versetzt sein können und als Durchflussspalte dienen.

Die Bildung von Dampfblasen und damit das Auftreten der Kavitation wird ferner gefördert durch eine möglichst große Länge der Abrisskanten.

Zu diesem Zweck können gerade bei scheibenförmigen Hinderniskörpern mit dem Umfang als Abrisskante diese durch gewellte oder gezackte Ausbildung in ihrer Länge vergrößert werden, wobei der ungerade Verlauf entweder bei Betrachtung in Axialrichtung oder in Querrichtung hierzu oder in beide Richtungen vorhanden sein kann.

Falls die ungerade, also gewellte oder gezackte, Form sich bei Betrachtung in Axialrichtung erschließt, kann auch das umgebende Gehäuse - betrachtet in axialer Richtung - analog ausgebildet sein, so dass über den gesamten Umfang ein jeweils gleich bleibender Querschnitt zwischen Gehäuse und Abrisskante eingehalten wird, oder das Gehäuse ist innen durchgehend rund ausgebildet, so dass in Umfangsrichtung die Abstände zur Abrisskante wechseln.

Wenn zusätzlich die Vorrichtung so gestaltet ist, dass in deren Betrieb bestimmte strömungstechnische Bedingungen eingehalten werden, ist der Kavitationseffekt besonders ausgeprägt:

So sollte die Querschnittsverengung nach der Eingangsöffnung so bemessen sein, dass die Fließgeschwindigkeit an der engsten Stelle der Querschnittsverengung der Fließgeschwindigkeit im Durchflussspalt des letzten Hinderniskörpers entspricht. Demgegenüber sollte die Fließgeschwindigkeit dahinter, am Auslass nach dem letzten Hinderniskörper, etwas höher liegen als im Durchflussspalt beim letzten Hinderniskörper.

Eine besonders einfache Ausführungsform ist dann gegeben, wenn als Hinderniskörper runde Scheiben mit in Strömungsrichtung gleich bleibendem Durchmesser verwendet werden, und der abnehmende Ringspalt erzielt wird, indem sich das Gehäuse in Hauptdurchflussrichtung verjüngt. Allerdings ist dieser Effekt weniger stark als bei kegelförmig kleiner werdenden Hinderniskörpern, insbesondere Scheiben.

Besonders vorteilhaft ist weiterhin eine starke Querschnittsverengung nach der Eingangsöffnung, so dass sich von der Eingangsöffnung bis zur engsten Stelle der Querschnittsverengung die Fließgeschwindigkeit um den Faktor 9 - 13, insbesondere um den Faktor 10 - 12, insbesondere um den Faktor 10,5 - 11,5, erhöht.

Vorteilhaft ist ferner, wenn die Hinderniskörper zueinander und/oder zu dem umgebenden Gehäuse so positioniert und dimensioniert werden, dass sich die Fließgeschwindigkeit im Durchflussspalt beim letzten Hinderniskörper in Strömungsrichtung verglichen zu dem Durchgangsspalt beim ersten Hinderniskörper um den Faktor 1,8 - 2,5, insbesondere um 2,0 - 2,3, erhöht.

Gleiches gilt, wenn erreicht wird, dass die Fließgeschwindigkeit vom einen zum nächsten Hinderniskörper im jeweiligen Durchgangsspalt jeweils um den Faktor 1,1 - 1,4 zunimmt.

Als optimales Verhältnis zwischen einfacher Bauform und hoher Effizienz der Vorrichtung hat sich eine Anzahl von Hinderniskörpern zwischen 3 und 10, insbesondere zwischen 5 und 7, herausgestellt.

Wenn bei Scheiben aus Metall, insbesondere aus Edelstahl, die Dicke zwischen 1 und 4 mm, insbesondere zwischen 2 und 3 mm, beträgt, ist die Herstellung sehr einfach, insbesondere kann dabei noch eine im rechten Winkel zur Hauptebene der Platten stehende Schneidkante verwendet werden, und die Platten sind dennoch ausreichend elastisch.

Der axiale Abstand von Mitte zu Mitte zweier benachbarter Hinderniskörper sollte dabei zwischen dem Zweifachen und dem Siebenfachen der Dicke der Platten betragen, insbesondere das Dreifache bis Fünffache.

Die radiale Breite des Ringspaltes zwischen dem Außenumfang der plattenförmigen Hinderniskörper und dem Gehäuse sollte dabei zwischen 1 und 5 mm, insbesondere zwischen 1,5 und 3,8 mm, betragen.

Darüber hinaus hat sich eine axiale Länge der Strecke mit konstantem Querschnitt des Gehäuses zwischen der Querschnittsaufweitung und der Prallplatte von einem 0,7 - 1,4-fachen des Durchmessers nach der Querschnittsaufweitung, also des konstanten Querschnitts, als vorteilhaft erwiesen.

Ebenso sollte der innere freie Durchmesser nach der Querschnittsaufweitung, also auf der Strecke mit konstantem Querschnitt zwischen dem 0,9-fachen und 2,0-fachen, insbesondere zwischen dem 0,9-fachen und 1,1-fachen, des freien Querschnitts der zu- und/oder abführenden Rohrleitung betragen.

Vorzugsweise wird dabei vor allem der erste, als Prallplatte ausgebildete, Hinderniskörper, ggf. auch der zweite Hinderniskörper, eine wesentlich größere Erstreckung in axialer Richtung aufweisen als die übrigen, eher plattenförmigen Hinderniskörper. Diese in axialer Richtung dickeren ersten Hinderniskörper weisen vorzugsweise an ihrem Außenumfang eine ringförmig umlaufende konkave Einbuchtung auf, so dass sie jeweils zwei ringförmig umlaufende, axial beabstandete Abrisskanten besitzen, wobei die Einbuchtung mindestens der Größe der radialen Breite des Ringspaltes entsprechen sollte, vorzugsweise einem Vielfachen dieses Spaltes.

Die Abrisskanten wirken dann besonders gut, wenn sie im Querschnitt betrachtet einen spitzen Winkel von weniger als 60°, insbesondere weniger als 50° oder gar 45°, besitzen und damit besonders scharf sind.

Dabei soll bevorzugt die in Hauptströmungsrichtung erste Abrisskante des ersten Hinderniskörpers noch im Bereich des konstanten Innendurchmessers des Gehäuses liegen, und nur die zweite sowie alle folgenden Abrisskanten sich bereits im axialen Bereich des sich verjüngenden Innendurchmessers des Gehäuses liegen.

Insgesamt sollte die Vorrichtung so dimensioniert und gestaltet sein, dass sich über die Gesamtlänge der Vorrichtung ein Druckabfall von 2,5 - 3 bar einstellt.

### c) Ausführungsbeispiele

Ausführungsformen gemäß der Erfindung sind im Folgenden beispielhaft näher beschrieben. Es zeigen:
- Fig. 1:: den Stabilisator,
- Fig. 2:: die gesamte Vorrichtung, also den Stabilisator eingebaut in eine Rohrleitung,
- Fig. 3:: einen Längsschnitt durch einen Teil des Stabilisators,
- Fig. 4:: einen Querschnitt durch einen Teil des Stabilisators, und
- Fig. 5:: einen Querschnitt durch eine andere Bauform des Stabilisators.

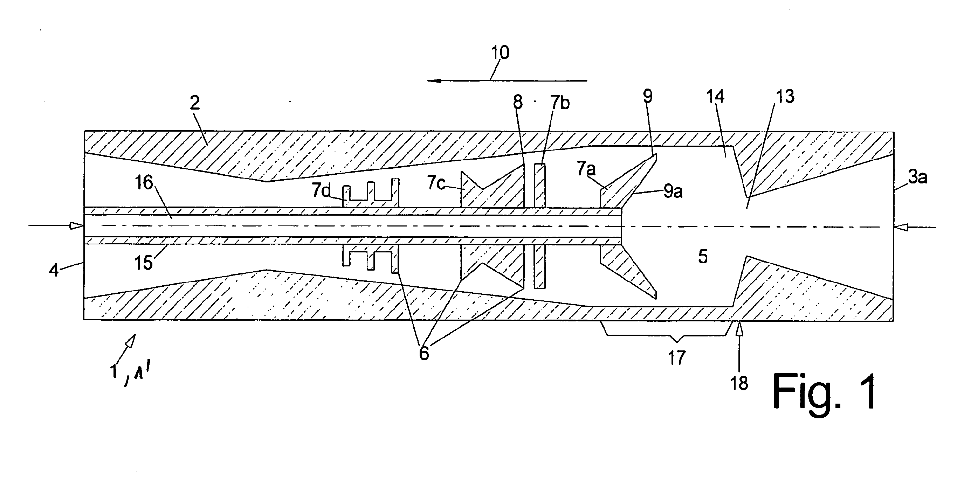

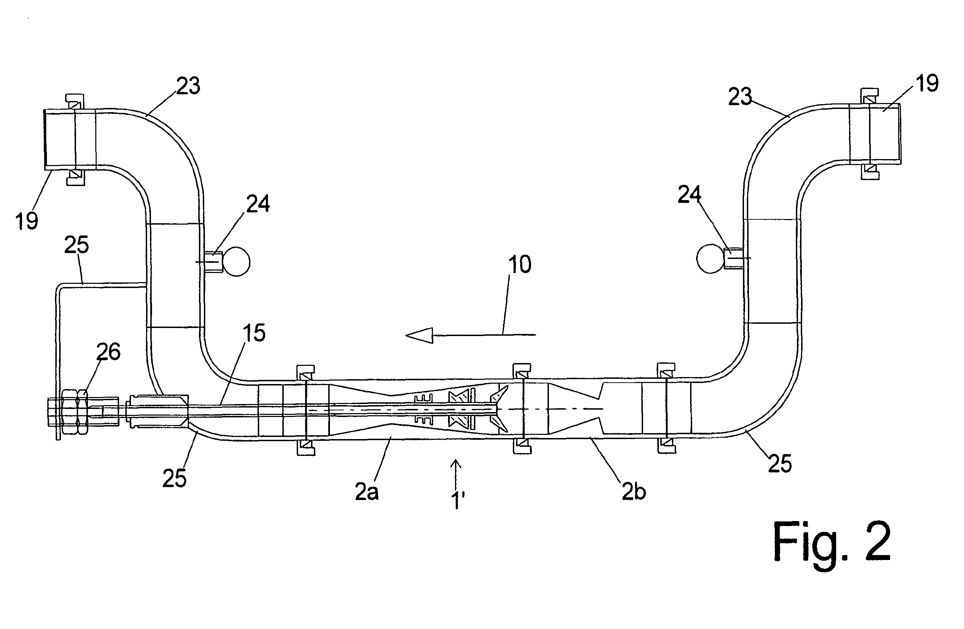

Figur 1 zeigt den eigentlichen Stabilisator 1', der aus einem vorzugsweise rotationssymmetrisch um die Hauptströmungsrichtung 10 ausgebildeten Rohrstück als Gehäuse 2 besteht, welches in Figuren 1 und 2 als Hauptdurchströmungsrichtung 10 von rechts nach links durchströmt wird.

Somit ist die linke offene Stirnseite die Eingangsöffnung 3a in die Durchflusskammer 5, wo zunächst eine konische Querschnittsverengung 13 bis zu deren engster Stelle 18 stattfindet.

Daran schließt sich eine wesentlich schnellere, also kürzere, Querschnittsaufweitung 14 an auf einen freien Durchlass etwa entsprechend den freien Durchlass an der Eingangsöffnung 3a oder etwas größer, jedoch mit einer Aufweitungsstrecke die nur ein 1/5 bis 1/10 der Länge der Verengungsstrecke beträgt.

Daran schließt sich eine Strecke 17 mit konstantem Durchmesser der Durchflusskammer 5 an, auf welche wiederum eine längere Strecke der konusförmigen Abnahme des freien Querschnitts mit anschließender etwa gleich starker Aufweitung erfolgt.

Die Kavitation tritt auf neben den in der Durchflusskammer 5 angeordneten Hinderniskörpern 7a,b,c,d von denen der erste noch im Bereich der Strecke 17 mit konstantem Innendurchmesser angeordnet ist und die übrigen in Hauptströmungsrichtung 10 dahinter im Bereich des abnehmenden freien Durchmessers.

Die Hinderniskörper 7 sind auf einer zentralen Achse 15 angeordnet, die von der Seite der Ausgangsöffnung 4 im Zentrum der Durchflusskammer 5 in diese hineinragt und mit dem ersten Hinderniskörper 7a endet.

Indem die zentrale Achse 15 als hohle Rohrleitung 16 ausgebildet ist, kann sie als Zuführung für die zweite Komponente 22 dienen, was jedoch nicht Gegenstand der vorliegenden Erfindung ist.

Dieser erste Hinderniskörper 7a dient somit als Prallplatte 9 mit einer der Strömungsrichtung 11 dieser ersten Komponente konkav entgegengewölbten vorderen Fläche als Prallfläche 9a.

Dieser als Prallplatte 9 ausgebildete erste Hinderniskörpers 7a besitzt den größten Querschnitt, während die folgenden Hinderniskörper 7b und 7c einen demgegenüber geringer werdenden Querschnitt aufweisen, vorzugsweise analog zum abnehmenden freien Durchmesser in der Durchflusskammer 5, so dass die radiale Breite des ringförmigen Durchflussspaltes 6 zwischen Hinderniskörper und umgebendem Gehäuse 2 in Strömungsrichtung 10 gleich bleibt oder gar abnimmt.

Die beispielhaft dargestellten Hinderniskörper 7a-d weisen zum Teil mehrere axial beabstandete, ringförmig umlaufende, am weitesten gegen das Gehäuse 2 vorstehende Abrisskanten 8 auf.

Der dritte Hinderniskörper 7c ist zu diesem Zweck im Längsschnitt betrachtet mit einer Ringnut am Außenumfang ausgestattet, die axial vorne und hinten von jeweils einer Abrisskante 8 begrenzt wird und die zwei ebene, zueinander parallele und genau lotrecht zur Axialrichtung liegende Anströmflächen aufweist.

Die Flanken der Ringnuten in den Mantelfächen dieser Hinderniskörper gehen in einen spitzen Winkel in diese Stirnflächen über, so dass Abrisskanten 8 gebildet werden, deren Winkel bei der vordersten Abrisskante, also an der Prallfläche 9a, etwa 45° beträgt und beide Winkel in den Abrisskanten teilweise sogar unter 45° betragen.

Der vierte Hinderniskörper 7d besteht aus mehreren, in diesem Fall drei, zueinander axial beabstandeten und fest miteinander verbundenen radialen Scheiben mit konstanter Dicke, deren schmale außen liegende Mantelflächen parallel zur Durchströmungsrichtung 10 und damit lotrecht zur Scheibenebene liegen, während als Hinderniskörper 7b eine einzelne Scheibe dargestellt ist, was die bevorzugte Form von Hindernissen sein wird.

Vorzugsweise sind die Hinderniskörper 7a, b, c, d jeweils einzeln entlang der zentralen Achse 15 einstellbar, zusätzlich ist die gesamte Achse 15 in Axialrichtung verschiebbar, wie am besten anhand der Figur 2 ersichtlich, die den Einbau des Stabilisators 1' in eine bestehende Rohrleitung 19 zeigt:

Aus dieser Rohrleitung 19 wird über Rohrbögen 23 zunächst eine Abkröpfung und ein Versatz parallel zur ursprünglichen Verlaufsrichtung der Rohrleitung 19 hergestellt, einschließlich in Zu- und Abführung zu dem Stabilisator 1' vorhandenen Sperrventilen 24.

Durch die beiden weiteren Rohrbögen 23', mittels derer wieder in die ursprüngliche, allerdings nun parallel versetzte, Verlaufsrichtung der Rohrleitung 19 übergegangen wird, kann der Stabilisator 1' nunmehr parallel zur ursprünglichen Verlaufsrichtung der Rohrleitung 19 zwischen die beiden Rohrbögen 23' montiert werden.

Auf diese Art und Weise kann die gerade verlaufende zentrale Achse 15 durch die Außenwandung des einen Rohrbogens 23' herausgeführt werden und dort gegenüber einer Stütze 23' abgestützt und mittels z. B. Verschraubung und Kontermutter 26 axial verstellt werden.

Figur 2 zeigt, dass der freie Querschnitt an der Eingangsöffnung 3a sowie an der Ausgangsöffnung 4 mit dem freien Querschnitt der übrigen Rohrleitung 19 übereinstimmt, und dass das Gehäuse 2 des Stabilisators zweiteilig ausgebildet ist, indem der eine Teil 2a der Gehäuseteil ist, in dem sich die Hinderniskörper 7a,b,c,d befinden und der andere Gehäuseteil 2b derjenige, der in Durchflussrichtung vor dem Hinderniskörper die Querschnittsverengung und anschließende Querschnittsaufweitung enthält.

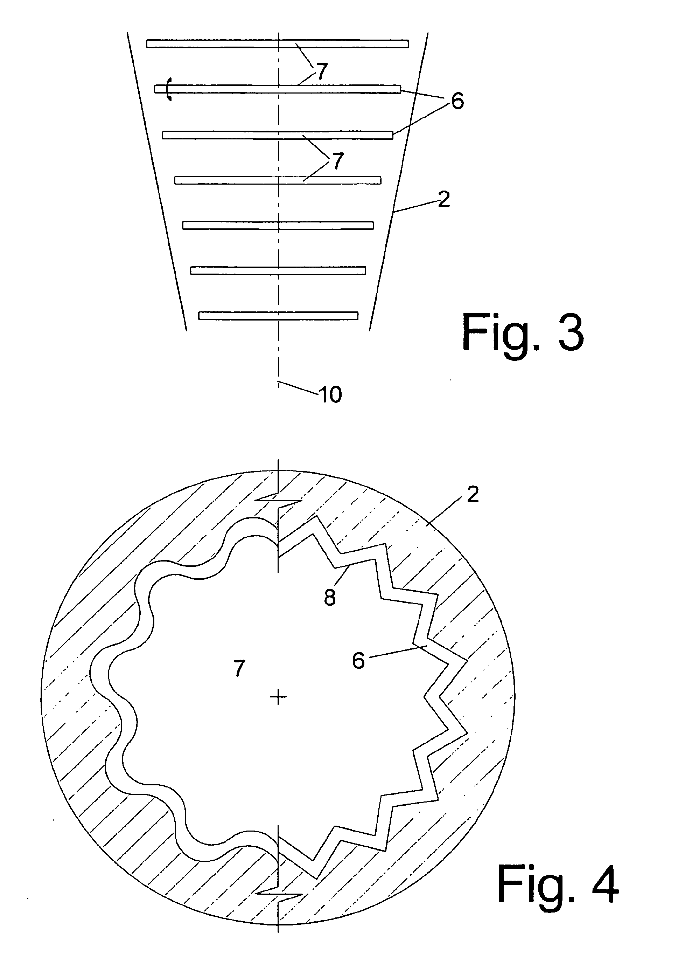

Figur 3 zeigt eine spezielle Bauform der Hinderniskörper 7 in Form von vorzugsweise einzelnen, jedoch zumindest am Außenumfang dünnen Scheiben.

Deren Dicke ist relativ zu ihrer Materialelastizität so ausgelegt, dass sie zumindest an ihrem freien äußeren Rand in und gegen die Durchströmungsrichtung 10 flexibel schwingen können, wodurch das Eintreten des Kavitationseffektes beschleunigt wird. Zu diesem Zweck sind die Scheiben im Zentrum gehalten und gegebenenfalls die Scheiben in der Höhe der freien umlaufenden Kanten dünner als der Rest ausgebildet.

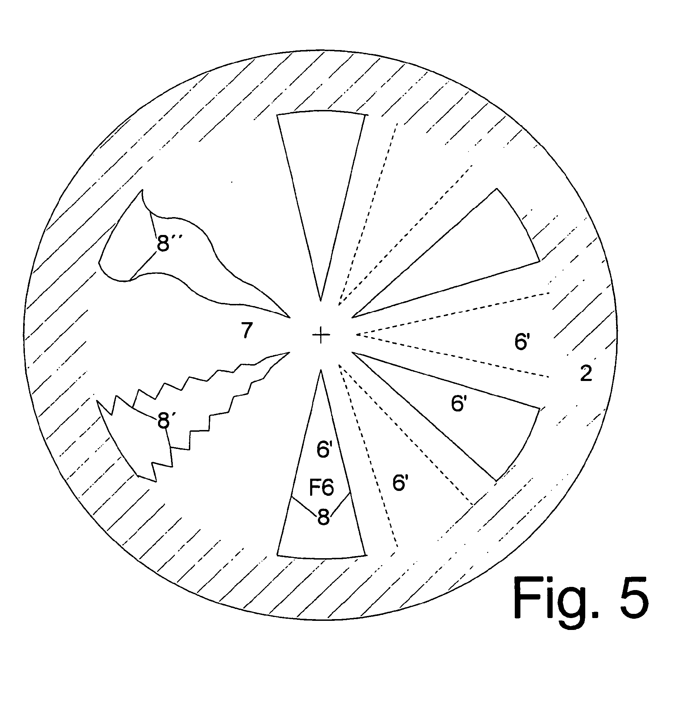

Die Figuren 4 und 5 zeigen spezielle Lösungen zur Gestaltung des Durchflussspaltes 6:

Bei Figur 4 wird analog der Figuren 1 und 2 davon ausgegangen, dass der Durchfluss-Spalt 6 ein ringförmig umlaufender Spalt zwischen dem inneren Hinderniskörper 7 und den radial außen, den Hinderniskörper 7 umgebendem, Gehäuse 2, ist.

Zur Verlängerung der Abrisskante 8, also der umlaufenden Außenkante, des Hinderniskörpers 7 und damit Verbesserung der Kavitationswirkung zeigt Figur 4, wie in Längsrichtung betrachtet eine Verlängerung erreicht werden kann durch gewellte oder gezackte Ausführung der Abrisskante 8. Wenn der Durchflussspalt 6 über den Umfang gleich breit bleiben soll, ist auch die Innenkontur des Gehäuses 2 analog gestaltet.

Figur 5 zeigt dagegen eine Lösung, bei der Durchflussspalt 6' kein ringförmig umlaufender Spalt zwischen dem Hinderniskörper 7 und dem Gehäuse 2 ist:

Vielmehr ist der Hinderniskörper 7 an seinem Außenumfang teilweise mit dem Gehäuse 2 verbunden, jedoch weist der Hinderniskörper 7 vom äußeren Rand nach innen bis fast ins Zentrum mehrere, etwa radial verlaufende DurchflussSpalte 6' auf, die sich radial von innen nach außen beispielsweise erweitern können. Diese etwa radial verlaufenden Abrisskanten können gerade ausgebildet sein und genau radial verlaufen, oder auch gezackt (Abrisskante 8') oder auch gewellt (Abrisskante 8") ausgebildet sein.

Um die Kavitation zu verstärken, können die Durchflussspalte 6' der einzelnen axial hintereinander liegenden Hinderniskörper in Umfangsrichtung zueinander versetzt angeordnet sein, wie in der rechten Bildhälfte der Figur 5 angedeutet.

Die Flächen F₆ der Durchflussspalte 6 können sich dabei in der Strömungsrichtung 10 von einem Hinderniskörper zum nächsten gezielt ändern, z. B. geringer werden, indem die z. B. Öffnungswinkel dieser segmentförmigen Durchflussspalte 6 in Strömungsrichtung immer kleiner werden und/oder aufgrund der Verringerung des Innendurchmessers der Durchflusskammer, also des Gehäuses 2.

### BEZUGSZEICHENLISTE

- 1': Stabilisator
- 2: Gehäuse
- 3a: Eingangsöffnung
- 4: Ausgangsöffnung
- 5: Durchflusskammer
- 6,6': Durchfluss-Spalt
- 7: Hinderniskörper
- 8: Abrisskante
- 9: Prallplatte
- 9a: Prallfläche
- 10: Hauptströmungsrichtung
- 13: Querschnittsverengung
- 14: Querschnittsaufweitung
- 15: zentrale Achse
- 16: Rohrleitung
- 17: Strecke konstanten Durchmessers
- 18: engste Stelle
- 19: Rohrleitung
- 23, 23': Rohrbogen
- 24: Sperrventil
- 25: Stütze
- 26: Kontermutter

- F₆: Fläche von 6

## Patentansprüche

1. Stabilisator (1') zum Stabilisieren eines hindurchströmenden Gemisches mit wenigstens zwei Komponenten, von denen mindestens eine flüssig ist, mittels eines hydrodynamischen Kavitationsfeldes, mit
- einem Gehäuse (2),
- einer Eingangsöffnung (3a) für die Zufuhr des Gemisches (20),
- einer Ausgangsöffnung (4) für die Austragung des Gemisches (20),
- einer Durchflusskammer (5) zwischen Eingangsöffnung (3a) und Ausgangsöffnung (4) mit in der Durchflusskammer (5) angeordneten, mehreren, Hinderniskörpern (7a, b, c, d), deren Ebene quer zur Hauptströmungsrichtung (10) liegt, und
- einem Durchflussspalt (6) zwischen den Kanten der Hinderniskörper (7a, b, c, d) und dem umgebenden Gehäuse (2),
wobei
- die Hinderniskörper (7a,b,c,d) über scharfe Abrisskanten (8) verfügen, wobei
- in Strömungsrichtung (11) nach der Eingangsöffnung (3a) zunächst eine Querschnittsverengung (13) und anschließend eine Querschnittsaufweitung (14) noch vor dem ersten Hinderniskörper (7a) vorhanden ist, zwischen der Querschnittsaufweitung (14) und der Prallplatte (9) eine Strecke (17) konstanten Querschnitts angeordnet ist.
- der erste Hinderniskörper (7a) als Prallplatte (9) ausgebildet ist,
**dadurch gekennzeichnet, dass**
die Flächen der Durchflussspalte (6) gemessen quer zur Hauptströmungsrichtung in Hauptströmungsrichtung (10) abnehmen.

2. Stabilisator nach einem der vorhergehenden Ansprüche,
**dadurch gekennzeichnet, dass**
die Scheiben relativ zueinander und zum umgebenden Gehäuse (2) so positioniert und dimensioniert werden, dass sich die Fließgeschwindigkeit (v) im jeweiligen Durchgangsspalt von dem einen Hinderniskörper (7a, b, c, d) zum nächsten in Fließrichtung (v) jeweils um den Faktor 1,1 bis 1,4 zunimmt.

3. Stabilisator nach einem der vorhergehenden Ansprüche,
**dadurch gekennzeichnet, dass**
- zwischen der Querschnittsaufweitung (14) und der Prallplatte (9) eine Strecke (17) konstanten Querschnitts angeordnet ist, und/oder insbesondere
- die Ausgangsöffnung (4) aus dem in Hauptströmungsrichtung (10) gerichteten Gehäuse (2) radial herausführt.

4. Stabilisator nach einem der vorhergehenden Ansprüche,
**dadurch gekennzeichnet, dass**
- die Hinderniskörper (7a,b,c,d) relativ zueinander axial verstellbar sind und insbesondere auch zur zentralen Achse (15) axial verstellbar sind, und/oder insbesondere
- die plattenförmigen Hinderniskörper so dimensioniert sind, dass sie in Strömungsrichtung schwingen können, und/oder insbesondere
- die plattenförmigen Hinderniskörper (7b, d) radial außen mit dem Gehäuse (2) verbunden sind und innerhalb ihres Umfanges Segmente zum Durchströmen frei bleiben, und/oder insbesondere
- die Abrisskanten (8) der Hinderniskörper (7a, b, c, d) eine möglichst große Verlaufslänge aufweisen und insbesondere gewellt oder gezackt ausgebildet sind, betrachtet entweder in axialer Richtung oder quer zur axialen Richtung.

5. Stabilisator nach einem der vorhergehenden Ansprüche,
**dadurch gekennzeichnet, dass**
- bei gewellter oder gezackter Abrisskante (8) betrachtet in axialer Richtung die Innenkontur des umgebenden Gehäuses (2) eine analog gewellte oder gezackte Kontur aufweist, und/oder insbesondere
- die Querschnittsverengung (13) nach der Eingangsöffnung (3a) so bemessen ist, dass die Fließgeschwindigkeit am Beginn der Querschnittsverengung der Fließgeschwindigkeit des Gemisches (20) am letzten Hinderniskörper (7d) entspricht, und insbesondere
- die Querschnittsverengung (13) nach der Eingangsöffnung (3a) so bemessen ist, dass die Fließgeschwindigkeit (v) an der engsten Stelle der Querschnittseinschnürung etwas höher ist, insbesondere zwischen 5% und 20% höher ist, als die Fließgeschwindigkeit (v) des Gemisches (20) beim letzten Hinderniskörper.

6. Stabilisator nach einem der vorhergehenden Ansprüche,
**dadurch gekennzeichnet, dass**
die Gehäusewandung in immer dem gleichen radialen Abstand zu den radialen Außenkanten der Scheiben verläuft.

7. Stabilisator nach einem der vorhergehenden Ansprüche,
**dadurch gekennzeichnet, dass**
die Hinderniskörper Scheiben mit gleich bleibendem Durchmesser sind, insbesondere identische Scheiben sind, und der radiale Abstand des äußeren Randes der Scheiben zum Gehäuse (2) in Haupt-Durchflussrichtung abnimmt.

8. Stabilisator nach einem der vorhergehenden Ansprüche,
**dadurch gekennzeichnet, dass**
die Querschnittsverengung (13) nach der Eingangsöffnung (3a) so stark ist, dass sich die Fließgeschwindigkeit (v) um den Faktor 9 bis 13, insbesondere um den Faktor 10 bis 12, insbesondere um den Faktor 10,5 bis 11,5, erhöht.

9. Stabilisator nach einem der vorhergehenden Ansprüche,
**dadurch gekennzeichnet, dass**
- die axiale Dicke der Scheiben zwischen 1 und 4 mm, insbesondere zwischen 2 und 3 mm, beträgt, und/oder insbesondere
- die radiale Breite des Ringspaltes zwischen den plattenförmigen Hinderniskörpern (7b, d) und ihrem Gehäuse 1 bis 5 mm, insbesondere 1,5 - 3,8 mm, beträgt, und/oder insbesondere
- die axiale Länge der Strecke mit konstantem Querschnitt zwischen der Querschnittsaufweitung (14) und der Prallplatte (9) dem 0,7- bis 1,4-fachem des Durchmessers nach der Querschnittsaufweitung (14) entspricht, und/oder insbesondere
- der innere freie Durchmesser nach der Querschnittsaufweitung (14) und vor der ersten Prallplatte (9) dem 0,9- bis 1,1-fachen des freien Querschnittes der zu- und/oder abführenden Rohrleitung (16) entspricht, und/oder insbesondere
- der freie Querschnitt nach der Querschnittsaufweitung (14) und vor der Prallplatte (9) dem 1,0- bis 2,0-fachen des freien Durchmessers der zu- und/oder abführenden Rohrleitung (16) beträgt.

10. Stabilisator nach einem der vorhergehenden Ansprüche,
**dadurch gekennzeichnet, dass**
mehrere plattenförmige Hinderniskörper (7b, d) zu einer Gruppe zusammengefasst nur gemeinsam in Längsrichtung entlang der zentralen Achse (15) verlagerbar sind.

11. Stabilisator nach einem der vorhergehenden Ansprüche,
**dadurch gekennzeichnet, dass**
der erste Hinderniskörper (7a) mit seiner in Strömungsrichtung ersten Abrisskante (8) noch im Bereich des konstanten Innendurchmessers des Gehäuses (2) liegt und die zweite Abrisskante (8) bereits im axialen Bereich des sich verjüngenden Innendurchmessers des Gehäuses (2), und/oder insbesondere
- die Vorrichtung so dimensioniert ist, dass sie einen Druckabfall über eine Gesamtlänge von 2,5 bis 3 bar erzeugt, und/oder insbesondere
- die scheibenförmigen Hinderniskörper (7b, d) bei einer Dicke von weniger als weniger als 3 mm eine parallel zur Längsachse oder parallel zur Gehäusewandung verlaufende, gerade Mantellinie an ihrem äußeren Rand aufweist.

## Claims

1. A stabilizer (1') for stabilizing a mixture flowing through having at least two components, at least one of them being liquid, through a hydrodynamic cavitation field, the stabilizer comprising:
- a housing (2);
- an inlet opening (3a) for supplying the mixture (20);
- an outlet opening (4) for exhausting the mixture (20);
- a thru-flow chamber (5) between inlet opening (3a) and outlet opening (4), wherein plural obstacle elements (7a, b, c, d), whose plane is transversal to a main flow direction (10), are disposed in the flow-through chamber (5); and
- a flow-through gap (6) between the edges of the obstacle elements (7a, b, c, d) and the surrounding housing (2), wherein
- the obstacle elements (7a, b, c, d) have sharp tear-off edges (8) wherein;
- initially a cross section contraction (13) and subsequently a cross section expansion (14) are still provided in front of the first obstacle element (7a) in flow direction (11) after the inlet opening (3a),
- a portion (17) with constant cross section is provided between the cross section expansion (14) and the impact plate;
- the first obstacle element (7a) is configured as an impact plate (9); and
- the surfaces of the flow-through gaps (6) measured transversal to the main flow direction decrease in the main flow direction (10).

2. The stabilizer according to one of the preceding claims, wherein the disks are positioned and sized relative to one another and relative to the surrounding housing (2), so that the flow velocity v in the respective pass-through gap increases from one obstacle element (7a, b, c, d) to the next obstacle element in flow direction v respectively by a factor of 1.1 - 1.4.

3. The stabilizer according to one of the preceding claims, wherein
- a portion (17) with constant cross section is disposed between the cross section expansion (14) and the impact plate (9) and/or in particular,
- the outlet opening (4) is oriented in a radially outward direction from the housing (2) oriented in main flow direction (10).

4. The stabilizer according to one of the preceding claims, wherein
- the obstacle elements (7a, b, c, d) are adjustable relative to one another
in axial direction, and also axially adjustable relative to the center axis (15), and/or in particular,
- the plate shaped obstacle elements are sized, so that they can vibrate in flow direction and/or in particular
- the plate shaped obstacle elements (7b, d ) are connected to the housing (2) on a radial outside, and flow-through segments are kept open within the circumference of the obstacle elements, and/or in particular
- the flow-tear-off edges (8) of the obstacle elements (7a, b, c, d) have the
largest extension possible, and are configured in particular undulated or serrated, viewed either in an axial direction or transversal to the axial direction.

5. The stabilizer according to one of the preceding claims, wherein
- the inner contour of the surrounding housing (2) includes an analogously
undulated or serrated contour for an undulated or serrated tear-of edge (8), viewed in an axial direction, and/or in particular
- the cross section expansion (13) after the inlet opening (3a) is sized, so that the flow velocity at the beginning of the cross section contraction corresponds to the flow velocity of the mixture (20) at the last obstacle element (7d), and in particular
- the cross section contraction (13) after the inlet opening (3a) is sized, so that the flow velocity v at the tightest location of the cross section contraction is slightly higher, in particular between 5% and 20% higher than the flow velocity v of the mixture (20) at the last obstacle element.

6. The stabilizer according to one of the preceding claims, wherein the housing wall always extends at the same radial distance from the radial outer edges of the disks.

7. The stabilizer according to one of the preceding claims, wherein the obstacle elements are disks with a constant diameter, in particular identical disks, and the radial distance of the outer edge of the disks from the housing (2) decreases in a main flow-through direction.

8. The stabilizer according to one of the preceding claims, wherein the cross section contraction (13) after the inlet opening (3a) is strong enough, so that the flow velocity v is reduced by a factor of 9 to 13, in particular by a factor of 10 to 12, in particular by a factor of 10.5 to 11.5.

9. The stabilizer according to one of the preceding claims, wherein
- the axial thickness of the disks is between 1 and 4 mm, in particular between 2 and 3 mm, and/or in particular
- the radial width of the annual gap between the plate shaped obstacle elements (7b, d) and their housing is 1 to 5 mm, in particular 1.5 to 3.8 mm, and/or in particular
- the axial length of the portion with constant cross section between the cross section expansion (14) and the impact plate (9) is 0.7 to 1.4 x the diameter after the cross section expansion (14) and/or in particular
- the free inner diameter after the cross section expansion (14) and in front of the first impact plate (9) corresponds to 0.9 to 1.1 x the free cross section of the supplying and/or removing conduit (16), and/or in particular
- the free cross section after the cross section expansion (14) and in front of the impact plate (9) corresponds to 1.0 to 2.0 x the free diameter of the inlet and/or outlet conduit (16).

10. The stabilizer according to one of the preceding claims, wherein plural plate shaped obstacle elements (7b, d) combined into a group are only displaceable in longitudinal direction along the central axis (15).

11. The stabilizer according to one of the preceding claims, wherein the first flow-tear-off edge (8) in flow direction of the first obstacle element (7a) is still in the portion of the constant inner diameter of the housing (2), and the second tear-off edge (8) is already disposed in the axial portion of the tapering inner diameter of the housing (2), and/or in particular
- the device is sized, so that it generates a pressure drop of 2.5 - 3 bar over an entire length, and/or in particular
- the disk shaped obstacle elements (7b, d) for a thickness of less than 3 mm have a straight enveloping line at their outer edges, which extends parallel to the longitudinal axis or parallel to the housing wall.

## Revendications

1. Stabilisateur (1') pour la stabilisation d'un mélange entrant avec au moins deux composants dont au moins un est liquide, au moyen d'un champ de cavitation hydrodynamique avec
- un carter (2),
- une ouverture d'entrée (3a) pour l'amenée du mélange (20),
- une ouverture de sortie (4) pour l'évacuation du mélange (20),
- une chambre de passage de débit (5) entre l'ouverture d'entrée (3a) et l'ouverture de sortie (4) avec plusieurs corps d'obstacle (7a, b, c, d) disposés dans la chambre de passage de débit (5), dont les plans sont transversaux à la direction d'écoulement principale (10), et
- une fente de passage de débit (6) entre les bords des corps d'obstacle (7a, b, c, d) et le carter environnant (2),
- les corps d'obstacle (7a, b, c, d) disposant de bords vifs d'arrachage (8)
- dans la direction d'écoulement (11) après l'ouverture d'entrée (3a) il existe tout d'abord un rétrécissement de section transversale (13) et ensuite un élargissement de section transversale (14) encore avant le premier corps d'obstacle (7a), entre l'élargissement de section transversale (14) et la plaque déflectrice (9) un tronçon (17) de section transversale constante étant disposé,
- le premier corps d'obstacle (7a) étant réalisé comme plaque déflectrice (9),
**caractérisé en ce que** les surfaces de la fente de passage de débit (6) diminuent dans la direction principale d'écoulement (10) mesurée transversalement à la direction découlement principale.

2. Stabilisateur selon l'une des revendications précédentes, **caractérisé en ce que** les disques sont positionnés et dimensionnés de manière relatives entre eux et par rapport au carter environnant (2) de sorte que la vitesse d'écoulement (v) augmente dans la fente de passage respective d'un corps d'obstacle (7a, b, c, d) au suivant dans la direction d'écoulement (v) respectivement du facteur 1,1 à 1, 4.

3. Stabilisateur selon l'une des revendications précédentes, **caractérisé en ce qu'**
- entre l'élargissement de section transversale (14) et la plaque déflectrice (9), il est disposé un tronçon (17) de section transversale constante et/ou en particulier
- l'ouverture de sortie (4) amène vers la sortie du carter (2) dirigé dans la direction principale d'écoulement (10).

4. Stabilisateur selon l'une des revendications précédentes, **caractérisé en ce que**
- les corps d'obstacle (7a, b, c, d) sont réglables axialement entre eux et sont réglables en particulier également par rapport à l'axe centrale (15) et/ou en particulier
- les corps d'obstacle en forme de plaque sont dimensionnés de sorte qu'ils puissent osciller dans la direction d'écoulement et/ou en particulier
- les corps d'obstacle en forme de plaque (7b, d) sont reliés radialement à l'extérieur avec le carter (2) et/ou des segments restent libres à l'intérieur de leur périphérie pour le passage d'écoulement et/ou en particulier
- les bords d'arrachage (8) des corps d'obstacle (7a, b, c, d) présentent une longueur de courbe la plus grande possible et en particulier sont ondulés ou dentelées, observé soit dans la direction axiale soit transversalement à la direction axiale.

5. Stabilisateur selon l'une des revendications précédentes, **caractérisé en ce qu'**
- en cas de bords d'arrachage (8) ondulé ou dentelés observés dans la direction axiale, le contour interne du carter environnant (2) présente un contour ondulé ou dentelé analogue et/ou en particulier
- le rétrécissement (13) de section transversale est mesuré après l'ouverture d'entrée (3a) de sorte que la vitesse d'écoulement correspond, au début du rétrécissement de section transversale, à la vitesse d'écoulement du mélange (20) au dernier corps d'obstacle (7d), et en particulier
- le rétrécissement (13) de section transversale est mesuré après l'ouverture d'entrée (3a) de sorte que la vitesse d'écoulement est plus élevée à l'endroit le plus étroit de l'étranglement de section transversale, en particulier entre 5 et 20 % que la vitesse d'écoulement (v) du mélange (20) au dernier corps d'obstacle.

6. Stabilisateur selon l'une des revendications précédentes, **caractérisé en ce que** la paroi de carter s'étend en direction des bords extérieurs des disques avec toujours la même distance radiale.

7. Stabilisateur selon l'une des revendications précédentes, **caractérisé en ce que** les corps d'obstacle sont des disques de diamètre constant en particulier des disques identiques et **en ce que** la distance radiale entre le bord externe des disques et le carter (2) diminue dans la direction principale d'écoulement.

8. Stabilisateur selon l'une des revendications précédentes, **caractérisé en ce que** le rétrécissement (13) après l'ouverture d'entrée (3a) est si forte que la vitesse d'écoulement (v) augmente du facteur 9 à 13, en particulier du facture 10 à 12, en particulier du facteur 10,5 à 11,5.

9. Stabilisateur selon l'une des revendications précédentes, **caractérisé en ce que** l'épaisseur axiale des disques est comprise entre 1 et 4 mm en particulier entre 2 et 3 mm, et/ou en particulier
- la largeur radiale de la fente annulaire entre les corps d'obstacle (7b, d) et leur carter est comprise entre 1 et 5 mm, en particulier 1,5 et 3,8 mm, et/ou en particulier
- la longueur axiale du tronçon de section transversale constante entre l'élargissement de section transversale (14) et la plaque déflectrice (9) correspond à 0,7 à 1,4 fois le diamètre après l'élargissement (14) de section transversale, et/ou en particulier
- le diamètre interne libre après l'élargissement (14) de section transversale et avant la première plaque déflectrice (9) correspond à 0,9 à 1,1 fois de la canalisation d'amenée et d'évacuation (16) et/ou en particulier
- la section transversale libre avant l'élargissement de section transversale (14) et après la première plaque déflectrice (9) est comprise entre 1,0 et 2,0 fois le diamètre libre de la canalisation d'amenée et d'évacuation (16).

10. Stabilisateur selon l'une des revendications précédentes, **caractérisé en ce que** plusieurs corps d'obstacle (7b, d) rassemblés en un groupe ne sont déplaçables qu'en commun dans le sens longitudinal le long de l'axe central (15).

11. Stabilisateur selon l'une des revendications précédentes, **caractérisé en ce que** le premier corps d'obstacle (7a) se trouve avec son premier bords d'arrachage (8) dans le sens d'écoulement, encore dans la zone du diamètre interne constant du carter (2) et le second bord d'arrachage (8) se trouve déjà dans la zone axiale du diamètre interne diminuant du carter (2), et/ou en particulier
- le dispositif est dimensionné de sorte qu'il génère une chute de pression sur la longueur totale de 3,5 à 3 bars et/ou en particulier
- les corps d'obstacle (7b, d) présentent sur leur bord externe pour une épaisseur inférieure à 3 mm une ligne d'enveloppe droite s'étendant parallèlement à l'axe longitudinal ou parallèlement à la paroi de carter.
